# EUROPÄISCHE PATENTSCHRIFT

(11) **EP 2 676 815 B1**
(45) Veröffentlichungstag und Bekanntmachung des Hinweises auf die Patenterteilung: **31.08.2016**
(21) Anmeldenummer: 13169827.6
(22) Anmeldetag: 30.05.2013
(51) Int. Cl.: B60C 11/04, B60C 11/13, B60C 11/03, B60C 11/11

(54) **Fahrzeugluftreifen**
Pneumatic tyre for a vehicle
Pneu de véhicule

(30) Priorität: 19.06.2012 DE 102012105300
(43) Veröffentlichungstag der Anmeldung: 25.12.2013
(73) Patentinhaber: Continental Reifen Deutschland GmbH, 30165 Hannover (DE)
(72) Erfinder: Rittweger, Stefan, 30163 Hannover (DE); Bauer, Claudia, 31542 Bad Nenndorf (DE); Woidtke, Oliver, 30855 Langenhagen (DE)
(74) Vertreter: Preusser, Andrea

(56) Entgegenhaltungen:
- EP-A1- 2 011 672
- WO-A1-2010/070690
- JP-A- 2006 056 480

## Beschreibung

Die Erfindung betrifft ein Laufstreifenprofil eines Fahrzeugreifens -insbesondere eines Fahrzeugluftreifens - mit Rillen, welche radial erhabene Profilelemente voneinander trennen, wobei die Rillen in radialer Richtung R nach innen jeweils durch einen Rillengrund und beiderseits des Rillengrundes in Richtung zum angrenzenden Profilelement hin jeweils durch eine eine Profilelementflanke bildende Rillenwand begrenzt ist, welche sich jeweils in radialer Richtung R des Reifens aus dem Rillengrund nach außen erstreckt, mit wenigstens einer Rille mit einer Haupterstreckungsrichtung, deren größte Richtungskomponente in Umfangsrichtung U des Fahrzeugreifens ausgebildet ist.

Derartige Laufstreifenprofile sind bekannt. Die in Umfangsrichtung gerichteten Rillen dienen dabei hauptsächlich zur Aufnahme und zur Ableitung von Wasser beim Befahren von benässten Oberflächen. Üblicherweise sind die Rillen dabei an ihren Oberflächen möglichst glatt ausgeführt, um auf diese Weise so wenig Verwirbelungen des Wassers wie möglich zu verursachen. Allerdings entstehen im Grenzschichtbereich zur Oberfläche hin dennoch Strömungsabrisse mit Miniturbulenzen, die einer optimalen Strömung entgegenwirken.

Es sind Ausbildungen von Rillen bekannt, bei denen über zusätzlich in den Rillenoberflächen in die Rille hinein sich erhebende Rippen ausgebildet sind, welche sich über die gesamte Erstreckung der Rille hinweg erstrecken. Hierdurch kann zwar eine Kanalisierung der Strömung verbessert werden. Eine beruhigende Wirkung auf die Strömung entfalten diese Rippen jedoch nur bedingt und dies unter relativ hohem zusätzlichem Gummivolumen innerhalb der Rille, wodurch jedoch das Aufnahmevolumens der Rille zur Aufnahme von Wasser weiter begrenzt wird. Dies begrenzt die Optimierung von Aquaplaning-Eigenschaften.

Aus der Natur ist es bekannt, dass Haifische mit ihrer Haifischhaut eine besondere Oberfläche mit kleinen gerichteten Erhebungen, welche sich auf den Schuppen befinden, ausgebildet sind, welche dafür sorgen, dass sich die Strömung, die an der Oberfläche anliegt, beruhigt. Miniverwirbelungen, welche einen höheren Widerstand verursachen würden, werden verringert. Der Abriss der laminaren Strömung im Bereich der Grenzschicht wird verringert. Die laminare Strömung an der Oberfläche kann deutlich verlängert werden.

Aus der JP 2002036820 A ist es bekannt, bei einem Laufstreifenprofil eines Fahrzeugluftreifens die Oberfläche der Rillenwände längs der Erstreckung der Rille mit einem sägezahnartigen Verlauf auszubilden, welcher dort als Haifischhautform bezeichnet wird. Die hier offenbarte Oberfläche ermöglicht dabei jedoch keine Bildung von Minikanälen, die die Strömung im Grenzbereich leiten und beruhigen könnte. Die dort genannte Oberfläche erzeugt darüber hinaus durch ihren scharfkantigen, zackigen Eingriff in die Rille zusätzliche Miniverwirbelungen in dem an den Zacken vorbeifließenden Wasser. Selbst wenn möglicherweise durch die gleiche Ausrichtung der Zacken in eine Erstreckungsrichtung der Rille bei großem Aufwand die sägezahnförmige Oberflächenkontur bei optimaler Auslegung ein auch ein positiver Einfluss auf die Strömung erzielt würde, so wäre dieser Effekt jedoch lediglich in einer Drehrichtung des Reifens zu erzielen, da die Sägezahnstruktur in der Gegendrehrichtung diese Effekte nicht mehr aufweisen, sondern durch die dann Ausrichtung der Zacken sogar zusätzlich verschlechtert werden.

Aus der DE 10 2004 052319 A1 ist ebenfalls bekannt, die Oberfläche von Rillen im Reifen der Haifischhaut nach zu empfinden und zwar durch die Ausbildung von schuppenförmig angeordneten, mit parallelen Minirillen überlagerten Oberflächenelementen. Die überlagerten Minirillen bewirken zwar eine beruhigende Leitung der Strömung, wobei die 3

Ausbildung relativ aufwendig ist. Die sich überlagernden Schuppen bilden dabei eine Rampenform, welche lediglich in eine Drehrichtung positive Strömungseinwirkungen ermöglicht und zumindest in Gegenrichtung zusätzliche deutliche Miniverwirbelungen erzeugen kann. Beim Einsatz in einem Reifen, welcher in beide Drehrichtungen günstige Strömungseigenschaften aufweisen soll, ist diese Ausbildung daher weniger geeignet. Die Ausbildung mit den Schuppen und mit den Schuppen überlagerten Minirillen, welche über die gesamte Erstreckung der Oberfläche ausgebildet ist, erfordert einen zusätzlichen in die Rille eingreifenden Aufwand an Gummimaterial und ein hierdurch reduziertes Aufnahmevolumen von Wasser in der Rille.

**Aus der** JP 2006 056480 A **ist ein Laufstreifenprofil eines Fahrzeugreifens gemäß den Merkmalen des Oberbegriffs des Anspruchs 1 bekannt.**

Der Erfindung liegt die Aufgabe zugrunde, ein Laufstreifenprofil mit derartigen Rillen auszubilden, die ein verbessertes, störungsfreies Strömungsverhalten des Wassers in beiden Drehrichtungen des Reifens ermöglichen.

Die Aufgabe wird erfindungsgemäß durch die Ausbildung eines Laufstreifenprofils eines Fahrzeugreifens -insbesondere eines Fahrzeugluftreifens - mit Rillen, welche radial erhabene Profilelemente voneinander trennen, wobei die Rillen in radialer Richtung R nach innen jeweils durch einen Rillengrund und beiderseits des Rillengrundes in Richtung zum angrenzenden Profilelement hin jeweils durch eine eine Profilelementflanke bildende Rillenwand begrenzt ist, welche sich jeweils in radialer Richtung R des Reifens aus dem Rillengrund nach außen erstreckt, mit wenigstens einer Rille mit einer Haupterstreckungsrichtung, deren größte Richtungskomponente in Umfangsrichtung U des Fahrzeugreifens ausgebildet ist, gemäß den Merkmalen von Anspruch 1 gelöst, bei dem in der Oberfläche wenigstens einer Rillenwand und/oder des Rillengrundes mehrere nebeneinander angeordnete und in Erstreckungsrichtung der Rille ausgerichtete erste Reihen von in Erstreckungsrichtung der Rille hintereinander und von einander beabstandet angeordneten in die Rille ragenden länglichen Erhebungen ausgebildet sind, deren in Erstreckungsrichtung der Rille gemessene Erstreckungslänge L₁ größer ist als ihre Erstreckungsbreite B₁, wobei die Erhebungen einer ersten Reihe jeweils in Erstreckungsrichtung der Rille zu den Erhebungen der benachbarten ersten Reihe versetzt und unter Überlappung mit einer Erhebung - insbesondere mit zwei Erhebungen - der benachbarten ersten Reihe angeordnet sind, **bei dem beiderseits einer ersten Reihe zwischen der ersten Reihe und der benachbarten ersten Reihe jeweils eine in Erstreckungsrichtung der Rille ausgerichtete zweite Reihe von in Erstreckungsrichtung der Rille hintereinander und von einander beabstandet angeordneten in die Rille ragenden länglichen Erhebungen ausgebildet ist, deren** in **Erstreckungsrichtung der Rille gemessene Erstreckungslänge L₂ größer ist als ihre Erstreckungsbreite B₂ mit L₂< L₁ und mit B₂< B₁, wobei längs der Erstreckungsrichtung der Rille innerhalb des Erstreckungsbereichs einer jeden Erhebung der ersten Reihe jeweils eine Erhebung der zu ihr benachbarten zweiten Reihe mit ihrer vollständigen Erstreckungslänge L₂ ausgebildet ist.**

Die Ausbildung ermöglicht durch die nebeneinander angeordneten, in Erstreckungsrichtung der Rille ausgebildeten ersten Reihen mit länglichen Erhebungen die Sicherstellung von leitenden Minikanälen in der Oberfläche und dadurch eine geleitete Strömung längs der Oberfläche der Rille, was sich beruhigend auf die Strömung auswirkt. Dabei ermöglicht die in Erstreckungsrichtung der Rille versetzte und überlappte Anordnung der Erhebungen der benachbarten ersten Reihen eine sichere Leitfunktion der Strömung in der Grenzschicht und die mit Abstand in Erstreckungsrichtung der Rille zueinander angeordnete Ausbildung einzelner Erhebungen innerhalb der ersten Reihen eine zusätzliche Beruhigung der Strömung. Der Effekt ist dabei in beiden Durchströmungsrichtungen der Rille und somit in beiden Drehrichtungen des Reifens möglich. Wie bei der Haifischhaut in der Natur wird durch diese Ausbildung eine Art Schuppenstruktur mit inselartigen Schuppen mit einer Strömungsleitfunktion über die gesamte Erstreckung der Reihen umgesetzt. Die Entstehung von Miniturbulenzen aufgrund von frühzeitigem Strömungsabriss kann reduziert und die laminare Strömung länger aufrecht erhalten werden. Diese Ausbildung mit den ersten Reihen mit in Erstreckungsrichtung voneinander beabstandenden Erhebungen ermöglicht dabei die Umsetzung der strömungsgünstigen Ausbildung mit relativ geringem in die Rille eingreifenden zusätzlichen Gummivolumen, wodurch unter anderem auch der Einfluss auf die Aufnahmekapazität zur Aufnahme von Wasser minimiert werden kann. Durch die **Ausbildung kann in einfacher Weise eine Strömungsoptimierung auch bei unterschiedlichen Fahrgeschwindigkeiten gezielt eingestellt werden.**

Besonders vorteilhaft ist die Ausbildung eines Laufstreifenprofils gemäß den Merkmalen von Anspruch 2, bei dem diejenigen zu zwei benachbarten ersten Reihen jeweils zugeordneten zweiten Reihen, welche zwischen den beiden ersten Reihen angeordnet sind, auf einer gemeinsamen Erstreckungslinie ausgebildet sind, wobei auf der Erstreckungslinie die Erhebungen der zu der einen ersten Reihe zuzuordnenden zweiten Reihe und die Erhebungen der zu der anderen ersten Reihe zuzuordnenden zweiten Reihe in alternierender Abfolge angeordnet sind. Hierdurch kann ermöglicht werden, dass die Reihen bei verschiedenen Geschwindigkeiten in Richtung der Rillenerstreckung gesehen eine weiter optimierte Strömungsleitfunktion bei weiter minimierter Störwirkung entfalten können.

Besonders vorteilhaft ist die Ausbildung eines Laufstreifenprofils gemäß den Merkmalen von Anspruch 3, bei dem zwischen erster Reihe und der ihr zugeordneten zweiten Reihe jeweils eine weitere in Erstreckungsrichtung der Rille ausgerichtete dritte Reihe von in Erstreckungsrichtung der Rille hintereinander und von einander beabstandet angeordneten, in die Rille ragenden länglichen Erhebungen ausgebildet ist, deren in Erstreckungsrichtung der Rille gemessene Erstreckungslänge L₃ größer ist als ihre Erstreckungsbreite B₃ mit L₂≤ L₃ ≤L₁ - insbesondere mit L₂< L₃ <L₁ - und mit B₂≤ B₃ ≤B₁- insbesondere mit B₂< B₃ <B₁-, wobei in Erstreckungsrichtung der Rille innerhalb des Erstreckungsbereichs einer jeden Erhebung der ersten Reihe jeweils eine Erhebung der zu ihr benachbarten dritten Reihe mit ihrer vollständigen Erstreckungslänge L₃ ausgebildet ist. Hierdurch kann in einfacher Weise eine weitere Strömungsoptimierung auch bei unterschiedlichen Fahrgeschwindigkeiten gezielt eingestellt werden.

Besonders vorteilhaft ist die Ausbildung eines Laufstreifenprofils gemäß den Merkmalen von Anspruch 4, bei dem die Erstreckungslänge L₁ mit 8mm≤ L₁≤30mm und die Erstreckungsbreite B₁ mit 0,8mm≤ B₁≤1,5mm ausgebildet ist. Dies ermöglicht eine optimale, funktionsorientierte Auslegung auf die relevanten Strömungsgeschwindigkeiten in derartigen Laufstreifenprofilen.

Besonders vorteilhaft ist die Ausbildung eines Laufstreifenprofils gemäß den Merkmalen von Anspruch 5, bei dem die Erstreckungsbreite B₁ mit (0,05 L₁)≤ B₁≤(0,2 L₁) ausgebildet ist. Hierdurch kann in einfacher Weise eine bestimmte Strömungsrichtung gezielt eingestellt werden.

Besonders vorteilhaft ist die Ausbildung eines Laufstreifenprofils gemäß den Merkmalen von Anspruch 6, bei dem die Erstreckungslänge L₂ mit 3mm≤ L₂≤10mm und die Erstreckungsbreite B₂ mit 0,8mm≤ B2≤1,5mm ausgebildet ist. Dies ermöglicht eine optimale funktionsorientierte Ausrichtung der Erhebungen der zweiten Reihen in Erstreckungsrichtung der Rille, wodurch eine gezielte Einstellung der gewünschten Strömungsrichtung begünstigt wird.

Besonders vorteilhaft ist die Ausbildung eines Laufstreifenprofils gemäß den Merkmalen von Anspruch 7, bei dem die Erstreckungsbreite B₂ mit (0,05 L₂)≤ B₂≤(0,2 L₂) ausgebildet ist. Hierdurch kann in einfacher Weise eine bestimmte Strömungsrichtung gezielt eingestellt werden.

Besonders vorteilhaft ist die Ausbildung eines Laufstreifenprofils gemäß den Merkmalen von Anspruch 8, bei dem die Erstreckungslänge L₂ mit (1/3) L₁ ≤ L₂≤ (1/2) L₁ ausgebildet ist.

Besonders vorteilhaft ist die Ausbildung eines Laufstreifenprofils gemäß den Merkmalen von Anspruch 9, bei dem die senkrecht zur Oberfläche der Rillenwand bzw. des Rillengrundes gemessene maximale Erstreckungshöhe h der Erhebungen mit 0,05mm ≤h ≤0,8mm - insbesondere mit 0,1mm ≤h ≤0,3mm - ausgebildet ist. Hierdurch kann die gewünschte Leitfunktion der Erhebungen in einfacher Weise bei Nutzung bekannter Formfertigungsmethoden umgesetzt werden.

Besonders vorteilhaft ist die Ausbildung eines Laufstreifenprofils gemäß den Merkmalen von Anspruch **10,** bei dem die senkrecht zur Oberfläche der Rillenwand bzw. des Rillengrundes gemessene maximale Erstreckungshöhe h der Erhebungen der ersten Reihe größer ist als die der anderen Reihen. Hierdurch kann in einfacher Weise eine Strömungsoptimierung auch bei unterschiedlichen Fahrgeschwindigkeiten gezielt eingestellt werden.

Besonders vorteilhaft ist die Ausbildung eines Laufstreifenprofils gemäß den Merkmalen von Anspruch **11,** wobei die Erhebungen in ihren senkrecht zur Längserstreckungsrichtung ausgebildeten Querschnitten mit einer Oberflächenkontur aus zwei sich in einem Scheitelpunkt schneidenden, geradlinigen Erhebungsflanken ausgebildet sind. Dies begünstigt eine gutes leitendes Eingreifen der Erhebungen in die Strömung bei einfacher Fertigung.

Besonders vorteilhaft ist die Ausbildung eines Laufstreifenprofils gemäß den Merkmalen von Anspruch **12,** wobei die Erhebungen mit einer längs ihrer Längenerstreckung veränderten Erstreckungshöhe ausgebildet sind, wobei insbesondere die Erstreckungshöhe ausgehend von einem Erstreckungsende der Erhebung in Richtung zum anderen Erstreckungsende der Erhebung degressiv bis zur Position der maximalen Erstreckungshöhe zu- und im weiteren Erstreckungsbereich bis zum Erstreckungsende progressiv abnehmend ausgebildet ist. Der hierdurch etwas bedingte etwas abgerundete Verlauf der Erstreckungshöhe begünstigt eine hohe Haltbarkeit im Reifen.

Die Erfindung wird im Folgenden an Hand der in den Figuren 1 bis 16 dargestellten Ausführungsbeispiele näher erläutert. Hierin zeigen
- Fig.1: Draufsicht auf ein Laufstreifenprofil eines PKW-Fahrzeugluftreifens,
- Fig.2: eine vergrößerte Detailansicht des Details II von Fig.1 mit Draufsicht auf eine Umfangsrille mit Rillengrund, in welchem mehrere Reihen von hintereinander angeordneten Erhebungen ausgebildet sind,
- Fig.3: eine Querschnittdarstellung der Rille von Fig.2 im Schnitt III-III von Fig.1,
- Fig.4: eine vergrößerte Darstellung der in axialer Richtung des Reifens nebeneinander angeordneten Erhebungen unterschiedlicher, nebeneinander angeordneter Reihen von Fig.2,
- Fig.5: eine Querschnittdarstellung des Rillengrundes gemäß Schnitt V-V von Fig.4,
- Fig.6: eine vergrößerte Darstellung einer Erhebung des Rillengrundes von Fig.2 und Fig.4 in Draufsicht,
- Fig.7: eine Querschnittdarstellung des Rillengrundes gemäß Schnitt VII-VII von Fig.6,
- Fig.8: eine Querschnittdarstellung des Rillengrundes gemäß Schnitt VIII-VIII von Fig.6,
- Fig.9: eine Querschnittdarstellung des Rillengrundes von Fig.4 gemäß Schnitt V-V von Fig.4 in alternativer Ausführung der Erhebungen,
- Fig.10: eine Darstellung des in Fig.2 ausgebildeten Musters an nebeneinander angeordneten Reihen von Erhebungen,
- Fig.11: eine Darstellung eines alternativen Musters von nebeneinander angeordneten Reihen von Erhebungen,
- Fig.12: vergrößerter Ausschnitt von quer zur Rillenerstreckung nebeneinander angeordneten Erhebungen des in Fig.11 dargestellten Musters zur Erläuterung der Anordnung,
- Fig.13: eine Darstellung einer weiteren alternativen nicht zur Erfindung gehörenden Ausbildung eines Musters von nebeneinander angeordneten Reihen von Erhebungen,
- Fig.14: eine Darstellung einer weiteren alternativen nicht zur Erfindung gehörenden Ausbildung eines Musters von nebeneinander angeordneten Reihen von Erhebungen,
- Fig.15: eine Darstellung einer weiteren alternativen Ausbildung eines Musters von nebeneinander angeordneten Reihen von Erhebungen und
- Fig.16: eine Darstellung einer weiteren alternativen nicht zur Erfindung gehörenden Ausbildung eines Musters von nebeneinander angeordneten Reihen von Erhebungen.

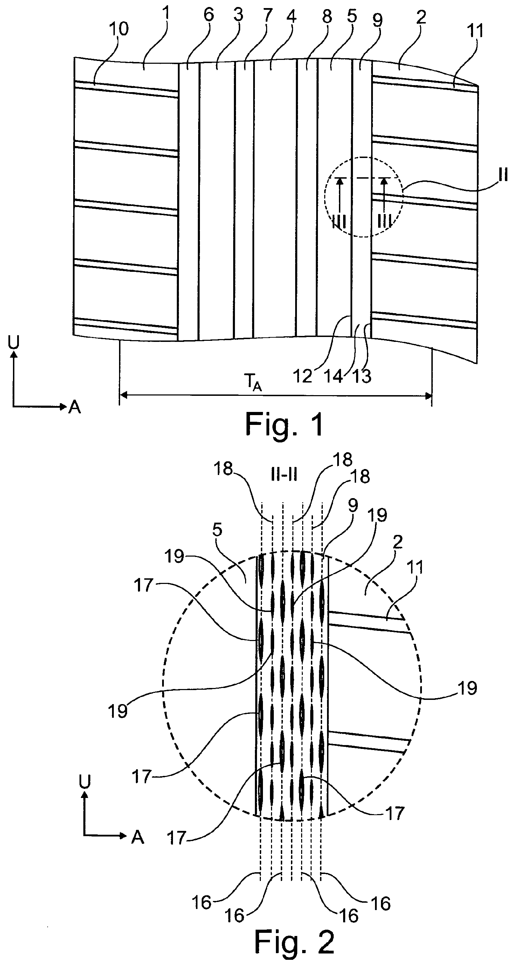

Fig.1 zeigt einen Umfangsabschnitt eines Laufstreifenprofils eines PKW-Reifens, bei welchem in bekannter Weise in axialer Richtung A des Reifens zwischen zwei in jeweils einer anderen Reifenschulter ausgebildeten Profilblockreihen 1 und 2 nebeneinander angeordnet Umfangsrippen 3, 4 und 5 sowie Umfangsrillen 6, 7, 8 und 9 ausgebildet sind. Die Umfangsrillen 6, 7, 8 und 9 erstrecken sich dabei über den gesamten Umfang des Fahrzeugluftreifens und sind in Umfangsrichtung U des Fahrzeugluftreifens ausgerichtet. Die Umfangsrippen 3, 4 und 5 erstrecken sich über den gesamten Umfang des Fahrzeugluftreifens und sind in Umfangsrichtung U des Fahrzeugluftreifens ausgerichtet. Die Profilblockreihen 1 und 11erstrecken sich über den gesamten Umfang des Fahrzeugluftreifens und sind in Umfangsrichtung U ausgerichtet. Die Umfangsrille 6 beabstandet in axialer Richtung A des Fahrzeugluftreifens die in der links dargestellten Reifenschulter ausgebildete Profilblockreihe 1 von der axial benachbarten Umfangsrippe 3. Die Umfangsrille 7 beabstandet in axialer Richtung A des Fahrzeugluftreifens die Umfangsrippe 3 von der axial benachbarten Umfangsrippe 4. Die Umfangsrille 8 beabstandet in axialer Richtung A die Umfangsrippe 4 von der axial benachbarten Umfangsrippe 5. Die Umfangsrille 9 beabstandet in axialer Richtung A des Fahrzeugluftreifens die Umfangsrippe 5 von der axial benachbarten Profilblockreihe 2. Die Profilblockreihe 1 ist in bekannter Weise aus in Umfangsrichtung U des Fahrzeugluftreifens hintereinander angeordneten Profilblockelementen bekannter Art ausgebildet, welche jeweils durch Querrillen 10 voneinander beabstandet sind. Die Querrillen 10 erstrecken dabei von einer Position außerhalb der Bodenaufstandsbreite T_{A} bis in die Umfangsrille 6. Die in der rechts dargestellten Reifenschulter ausgebildete Profilblockreihe 2 ist in bekannter Weise aus über den Umfang des Fahrzeugluftreifens verteilt und hintereinander angeordneten Profilblockelementen bekannter Art ausgebildet, welche jeweils in Umfangsrichtung U durch Querrillen 11 voneinander beabstandet sind. Die Querrillen 11 erstrecken sich von einer axialen Position außerhalb der Bodenaufstandsbreite T_{A} bis in die Umfangsrille 9.

Die Bodenaufstandsbreite ist die Breite des den Boden berührenden Teils des Laufstreifens, welcher dem statisch ermittelten Footprint gemäß E.T.R.T.O.-Standards (gemessen bei einer Last, welche 70 % der bei einem Innendruck von 2,5 bar gegebenen Tragfähigkeit des Reifens entspricht, und bei einem Innendruck von 85 % von 2,5 bar) entspricht.

Die Profilblockreihen 1 und 2 sowie die Umfangsrippen 3, 4 und 5 sind in radialer Richtung R des Fahrzeugluftreifens nach außen hin jeweils durch eine die Bodenkontaktoberfläche bildende radial äußere Oberfläche 15 begrenzt.

Die Umfangsrillen 6, 7, 8 und 9 sind in radialer Richtung R des Fahrzeugluftreifens nach innen hin jeweils durch einen Rillengrund 14 und in axialer Richtung A des Fahrzeugluftreifens zu beiden Seiten hin jeweils durch eine Rillenwand begrenzt, welche jeweils die zur angrenzenden Profilrippe bzw. Profilblockreihe bildende Profilelementflanke bildet.

Wie in den Figuren 1, 2 und 3 zu erkennen ist, ist die Umfangsrille 9 in axialer Richtung A zur Umfangsrippe 5 hin durch eine Rillenwand 12 und zur Profilblockreihe 2 hin durch eine Rillenwand 13 begrenzt. Die Rillenwand 12 bildet dabei die zur Umfangsrille 9 hin gerichtete Rippenflanke der Umfangsrippe 5. Die Rillenwand 13 bildet die zur Umfangsrille 9 hin gerichtete Flanke der Profilblockreihe 2. Die Rillenwand 12 erstreckt sich ausgehend vom Rillengrund 14 in radialer Richtung R nach außen bis zu der die Umfangsrippe 5 nach radial außen hin begrenzenden radial äußeren Oberfläche 15. Die Rillenwand 13 erstreckt sich ausgehend vom Rillengrund 14 in radialer Richtung R des Fahrzeugluftreifens nach außen bis zu der die Profilblockreihe 2 in radialer Richtung R nach außen hin begrenzenden radial äußeren Oberfläche 15.

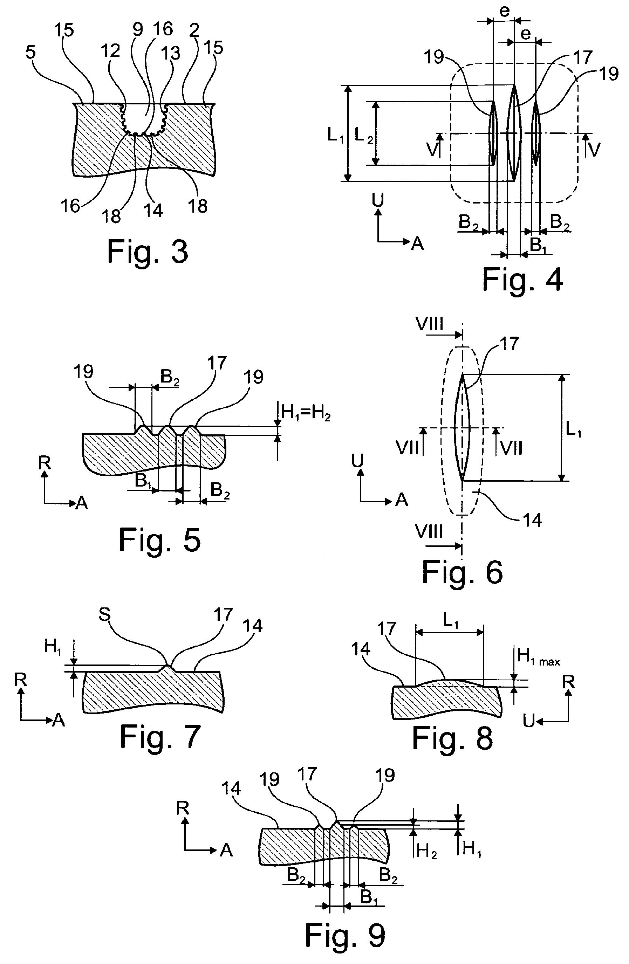

Wie in den Figuren 3, 6, 7 und 16 dargestellt ist, ist im Rillengrund 14 sowie in den beiden Rillenwänden 12 und 13 jeweils ein Muster von Erhebungen 17, welche sich aus der Oberfläche des Rillengrundes 14 bzw. der Rillenwände 15 und 16 in die Rille hinein erstrecken, ausgebildet.

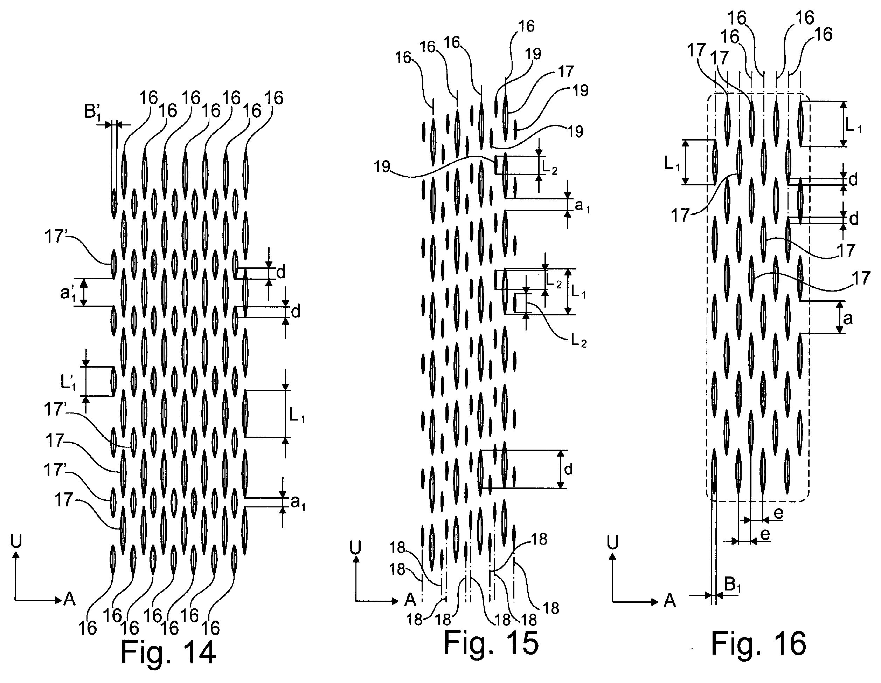

Die Muster von Erhebungen 17 sind in den Fig. 16, 7, 6 und 8 am Beispiel der Ausbildung der Erhebungen 17 aus dem Rillengrund 14, welches sich über den gesamten Rillengrund 14 erstreckt, näher dargestellt. Die Muster von Erhebungen in den Rillenwänden sind in analoger Weise ausgebildet. Bei dem Muster von Erhebungen 17 sind in einer längs von geradlinig in Umfangsrichtung U ausgerichteten über den Umfang des Reifens erstreckten, parallelen Erstreckungslinien 16 in Umfangsrichtung U hintereinander und im Abstand a voneinander angeordnet längliche Erhebungen 17 in einer in Umfangsrichtung gerichteten Reihe über dem Umfang des Fahrzeugluftreifens hinweg verteilt angeordnet. Die Erhebungen 17 sind jeweils mit ihrer Haupterstreckungsrichtung in Erstreckungsrichtung der Umfangsrille 9 und somit in Umfangsrichtung U ausgerichtet. Die Erhebungen 17 sind mit einer im Rillengrund 14 in ihrer Haupterstreckungsrichtung gemessenen Erstreckungslänge L₁ und mit einer ebenfalls im Rillengrund 14 quer zur Haupterstreckungsrichtung und somit quer zur Umfangsrichtung U gemessenen, maximalen Erstreckungsbreite B₁ ausgebildet. Länglich bedeutet in diesem Zusammenhang, dass die Länge L₁ deutlich größer als die Breite B₁ mit (0,05 L₁)≤ B₁ ≤ (0,2 L₁) ausgebildet ist. Beispielsweise ist B₁ mit B₁ = (0,1 L₁) ausgebildet.

Für die Erstreckungslänge L₁ der Erhebungen 17 gilt jeweils 8mm ≤ L₁ ≤ 30mm. Die Breite B₁ ist jeweils mit 0,8 mm ≤ B₁≤ 1,5 mm ausgebildet.

Die Erhebungen 17 erheben sich dabei bis in eine Höhe H₁ aus dem Rillengrund 14, wobei die Höhe H₁ senkrecht zu der umgebenen Rillengrundoberfläche gemessen wird. Die Höhe H₁ ist mit 0,1 mm ≤ H₁ ≤ 0,8 mm ausgebildet. In besonderer Ausführung ist die Höhe H₁ mit 0,2 mm ≤ H₁ ≤ 0,3 mm, beispielsweise mit H₁ = 0,3 mm ausgebildet.

Wie in Fig.16 dargestellt ist, sind mehrere derartige in axialer Richtung A des Reifens benachbarte und geradlinig in Umfangsrichtung U ausgerichtete Erstreckungslinien 16 von Reihen von Erhebungen 17 jeweils im Abstand e voneinander angeordnet. Auf jeder dieser Erstreckungslinien 16 sind über den Umfang der Fahrzeugluftreigens hinweg verteilt und in Umfangsrichtung U des Reifens und somit in Erstreckungsrichtung der Rille gesehen reihenförmig hintereinander angeordnet derartige Erhebungen 17 der Erstreckungslänge L₁ jeweils in Umfangsrichtung U im Abstand a zueinander ausgebildet. Dabei sind die Erhebungen 17 von jeweils zwei in axialer Richtung A unmittelbar benachbart angeordneten Erstreckungslinien 16 in Umfangsrichtung U des Fahrzeugluftreifens derart versetzt zueinander angeordnet, dass sich jede auf der einen Erstreckungslinie 16 angeordnete radiale Erhebung 17 in ihrer Umfangserstreckung an ihrem in
Umfangsrichtung vorderen Erstreckungsende jeweils mit einem hinteren Erstreckungsabschnitt der Umfangserstreckung einer ersten radialen Erhebung 17, welche auf der unmittelbar in axialer Richtung A benachbarten Erstreckungslinie 16 ausgebildet ist, und an ihrem in Umfangsrichtung hinteren Erstreckungsende jeweils mit einem vorderen Erstreckungsabschnitt der Umfangserstreckung einer zweiten radialen Erhebung 17, welche ebenfalls auf der unmittelbar in axialer Richtung A benachbarten Erstreckungslinie 16 im in Umfangsrichtung U gemessenen Abstand a zur ersten Erhebung 17 ausgebildet ist, jeweils über einen Erstreckungsabschnitt d überlappt. In dem in Fig.16 dargestellten Ausführungsbeispiel überlappt sich dabei jede Erhebung 17, welche auf einer Erstreckungslinie 16 ausgebildet ist an ihrem in Umfangsrichtung vorderen Erstreckungsende und an ihrem in Umfangsrichtung hinteren Erstreckungsende dabei jeweils mit radialen Erhebungen 17 der zur rechten und mit radialen Erhebungen 17 der zur linken Seite nächstliegend benachbarten Erstreckungslinie 16 über eine Überlappungslänge d.

Der Abstand a zwischen zwei in Umfangsrichtung U hintereinander auf einer Erstreckungslinie 16 ausgebildeten Erhebungen 17 ist mit 2mm ≤ a ≤ (0,9 L₁) ausgebildet.

Der Abstand e zwischen zwei benachbarten Erstreckungslinien 16 ist mit e ≤ 5 mm ausgebildet.

Die Überlappungslänge d ist mit 1mm ≤ d < L₁ ausgebildet.

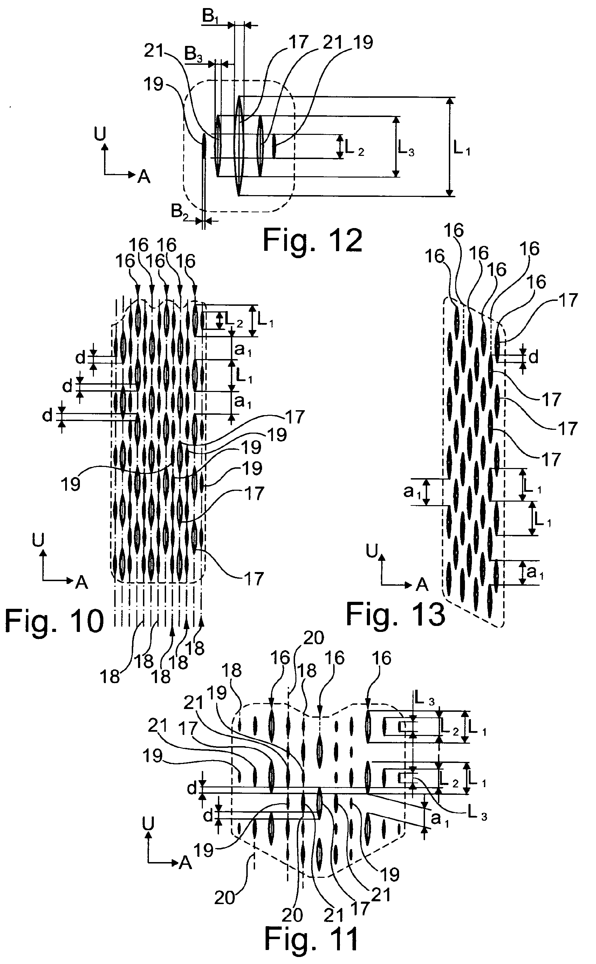

Fig. 13 zeigt ein alternatives Ausführungsbeispiel, bei welchem die auf einer ersten Erstreckungsline 16 angeordneten Erhebungen 17 jeweils lediglich mit ihrem in Umfangsrichtung U vorderen Erstreckungsende mit einem hinteren Erstreckungsende einer auf der zur rechten Seite hin axial benachbarten Erstreckungslinie 16 ausgebildeten radialen Erhebung 17 überlappt ausgebildet ist jedoch ohne Überlappung des anderen Erstreckungsendes .

Fig.14 zeigt ein alternatives Ausführungsbeispiel, bei welcher in Abwandlung zur Ausbildung von Fig.16 auf jeder zweiten Erstreckungsreihe 16 anstelle der Erhebungen 17 mit der Erstreckungslänge L₁ und mit der Breite B₁ Erhebungen 17' mit einer Erstreckungslänge L₁' und mit einer Breite B₁' ausgebildet sind, wobei die Erstreckungslänge L₁'< L₁ und die Breite B₁' < B₁ ausgebildet ist.

Die Fig. 2, 10, 4 und 5 zeigen ein alternatives Ausführungsbeispiel mit derartigen jeweils nebeneinander angeordneten Erstreckungslinien 16 von derartigen versetzten Reihen von Erhebungen17, auf welchen jeweils Erhebungen 17 in Umfangsrichtung U des Reifens hintereinander aufgereiht sind. Bei diesem Ausführungsbeispiel ist jedoch beiderseits einer jeden Erstreckungslinie 16 einer Reihe von Erhebungen 17 jeweils eine parallel zur Erstreckungslinie 16 und somit in Erstreckungsrichtung der Rille - d.h. in Umfangsrichtung U - ausgerichtete Erstreckungslinie 18 einer Reihe von Erhebungen 19 mit über den Umfang des Reifens verteilten, in Umfangsrichtung U hintereinander angeordneten Erhebungen 19 der Erstreckungslänge L₂, der Breite B₂ und der Erstreckungshöhe H₂ ausgebildet. Dabei ist jeweils axial neben einer Erhebung 17 einer Erstreckungslinie 16 eine Erhebung 19 auf der unmittelbar zur Erstreckungslinie 16 benachbarten Erstreckungslinie 18 ausgebildet. Diese Erhebung 19 erstreckt sich dabei - wie in Fig.4 zu erkennen ist - mit ihrer gesamten Erstreckungslänge L₂ innerhalb des Umfangserstreckungsabschnittes der in Umfangsrichtung U des Fahrzeugluftreifens gemessenen Erstreckungslänge L₁ dieser benachbarten Erhebung 17. Hierdurch ergibt sich ein über den Umfang des Reifens sich wiederholendes Muster von in Fig. 4 dargestellten Oberflächenabschnittselementen, bei denen jeweils beiderseits einer Erhebung 17 einer Erstreckungslinie 16 eine genau eine Erhebung 19 auf einer unmittelbar benachbarten Erstreckungslinie 18 ausgebildet ist. Für die Erstreckungslänge L₂ und die Breite B₂ gilt dabei jeweils L₂ < L₁ und B₂ < B₁.

Die Erstreckungslänge L₁, die Breite B₁ und die Erstreckunghöhe H₁ der Erhebungen 17 sind wie oben angegeben gewählt. Die Längen L₁ der Erhebungen 17 und L₂ der Erhebungen 19 sind dabei mit (1/3) L₁ ≤ L₂ ≤ (1/2) L₁ ausgebildet.

Für die Erstreckungslänge L₂ der Erhebungen 19 gilt jeweils 3mm ≤ L₂ ≤ 10mm. Die Breite B₂ ist jeweils mit 0,8 mm ≤ B₂≤ 1,5 mm ausgebildet. Beispielsweise ist L₁ = 10 mm, L₂ = 5 mm, B₁ = 1 mm und B₂ = 0,8 mm.

Die Erstreckungshöhe H₂ ist mit 0,1mm ≤ H₂ ≤ H₁ ausgebildet.

Fig. 5 zeigt eine Ausführung, bei welcher H₁ = H₂ gewählt ist. Fig. 9 zeigt eine andere Ausführung, bei welcher H₂ < H₁ ausgebildet ist.

Fig. 2 und 10 zeigen ein Ausführungsbeispiel, bei dem jeweils die zwischen zwei benachbarten Erstreckungslinien 16 auf einer gemeinsamen Erstreckungslinie 18 ausgebildeten Erhebungen 19 über den Umfangs des Reifens hinweg jeweils in alternierender Reihenfolge jeweils entweder innerhalb des Umfangserstreckungsabschnitts einer radialen Erhebung 17 der zur einen axialen Seite hin benachbarten Erstreckungslinie 16 oder innerhalb des Umfangserstreckungsabschnitts einer radialen Erhebung 17 der zur anderen axialen Seite hin benachbarten Erstreckungslinie 16 ausgebildet sind.

Fig. 15 zeigt ein alternatives Ausführungsbeispiel, bei welchem zwischen benachbarten Erstreckungslinien 16 jeweils zwei in axialer Richtung A voneinander beabstandete Erstreckungslinien 18 ausgebildet sind, auf denen über den Umfang des Reifens hinweg verteilt jeweils radiale Erhebungen 19 der Erstreckungslänge L₂ ausgebildet sind. Dabei sind die auf der einer Erstreckungslinie 16 näher gelegenen Erstreckungslinie 18 ausgebildeten Erhebungen 19 jeweils in ihrer Erstreckung innerhalb des Umfangserstreckungsabschnittes der Erstreckungslänge L₁ derjenigen benachbarten Erhebung 17, welche auf dieser der Erhebung 19 nächst gelegenen Erstreckungslinie 16 ausgebildet ist.

Die Figuren 11 und 12 zeigen ein weiteres alternatives Muster der Anordnung von radialen Erhebungen, bei denen jeweils in axialer Richtung A zwischen den auf Erstreckungslinien 16 ausgebildeten radialen Erhebungen 17 der Erstreckungslänge L₁ und den zu ihnen benachbarten, in ihrem Umfangserstreckungsabschnitt ausgebildeten radialen Erhebungen 19 der Erstreckungslänge L₂ zusätzliche radiale Erhebungen 21der Erstreckungslänge L₃ ausgebildet sind mit L₁ > L₃ > L₂. Die radialen Erhebungen 21 sind mit einer Breite B₃ ausgebildet, welche mit B₂ ≤ B₃ ≤ B₁ ausgebildet ist. Die Erstreckungshöhe H₃ der radialen Erhebungen 21 ist mit H₂ ≤ H₃ ≤ H₁ ausgebildet. Beispielsweise ist in einer Ausführung H₁ > H₃ > H₃ und B₁ > B₃ > B₁ ausgebildet.

Die zwischen den auf einer Erstreckungslinie 16 angeordneten radialen Erhebungen 17 und den beiderseits der radialen Erhebungen 17 dieser Erstreckungslinie 16 jeweils auf einer Erstreckungslinie 18 angeordneten radialen Erhebungen 19 zusätzlich angeordneten radialen Erhebungen 21 sind dabei ebenfalls auf einer geradlinig in Umfangsrichtung U ausgerichteten Erstreckungslinie 20 angeordnet. Diese Erstreckungslinie 20 ist dabei zwischen der Erstreckungslinie 16 und derjenigen Erstreckungslinie 18 angeordnet, auf welcher die im Umfangserstreckungsabschnitt der auf der Erstreckungslinie 16 angeordneten Erhebungen 16 nächstliegend angeordneten radialen Erhebungen 19 ausgebildet und somit diesen Erhebungen 16 jeweils zuzuordnen sind.

Fig. 11 zeigt ein Ausführungsbeispiel, bei welchem die in diesem Sinne zu den Erhebungen 17 einer ersten Erstreckungslinie 16 zuzuordnende Erstreckungslinie 20 der zur Erhebung 17 parallelen benachbarten Erhebung 21 jeweils die Erstreckungslinie 18 der Erhebungen 19, welche den Erhebungen 17 der zur ersten Erstreckungslinie 16 unmittelbar benachbarten Erstreckungslinie 16 zuzuordnen ist.

Wie in Fig.12 dargestellt ist, bilden die Erhebung 17 mit den ihr zuzuordnenden benachbarten Erhebungen 19, 21 bzw. die Erhebung 17 mit den beiden ihr zuzuordnenden Erhebungen 19 von Fig. 4 ein rautenförmiges Muster von Erhebungen, welche sich - wie in den Fig.2, Fig. 10, Fig.11 dargestellt - über den Umfang des Reifens hinweg wiederholt. Hierdurch wird ein der Haifischschuppe ähnliches Strukturmuster in Rillenoberfläche abgebildet.

Wie in Fig.7 an der Erhebung 17 beispielhaft für die Erhebungen 17, 19 und 21 dargestellt ist, sind die Erhebungen 17,19,21 in den Querschnitten senkrecht zur Erstreckungsrichtung der Rille und somit senkrecht zur Erstreckungsrichtung der Erhebung 17,19,21 jeweils mit einer Kontur von zwei sich in einem Scheitelpunkt S schneidenden geradlinigen Flankenlinien ausgebildet. Der Scheitelpunkt S bildet dabei den Punkt der maximalen Höhenerstreckung der jeweiligen Erhebung 17,19,21 innerhalb dieser Querschnittebene an.

Wie beispielsweise der Fig. 6 und Fig.16 am Beispiel der Erhebung 17 entnommen werden kann, bilden die Scheitelpunkte S der Querschnittebenen längs der Erstreckung der jeweiligen Erhebung 17,19,21 gesehen dabei eine gradlinig in Umfangsrichtung U erstreckte auf der Erstreckungslinie 16 liegende Scheitellinie. Die Scheitellinie ist - wie in Fig. 8 zu erkennen ist - dabei längs der Erstreckungsrichtung der Rille mit einem krummlinigen Höhenverlauf ausgebildet, welcher längs der Erstreckung L₁ der Erhebung 17, ausgehend vom Rillengrund 14 zunächst degressiv bis zur maximalen Erstreckungshöhe H₁ₘₐₓ der radialen Erhebung 17 zunimmt und in der Verlängerung wiederum bis zum Rillengrund progressiv abnimmt.

### Bezugszeichenliste

### (Teil der Beschreibung)

- 1: Profilblockreihe
- 2: Profilblockreihe
- 3: Profilrippe
- 4: Profilrippe
- 5: Profilrippe
- 6: Umfangsrille
- 7: Umfangsrille
- 8: Umfangsrille
- 9: Umfangsrille
- 10: Querrille
- 11: Querrille
- 12: Rillenwand
- 13: Rillenwand
- 14: Rillengrund
- 15: Radial äußere Oberfläche
- 16: Reihenlinie
- 17: Erhebung
- 18: Reihenlinie
- 19: Erhebung
- 20: Reihenlinie
- 21: Erhebung

## Patentansprüche

1. Laufstreifenprofil eines Fahrzeugreifens -insbesondere eines Fahrzeugluftreifens - mit Rillen (6,7,8,9), welche radial erhabene Profilelemente (1,3,4,5,2) voneinander trennen, wobei die Rillen (6,7,8,9) in radialer Richtung R nach innen jeweils durch einen Rillengrund (14) und beiderseits des Rillengrundes (14) in Richtung zum angrenzenden Profilelement (1,3,4,5,2) hin jeweils durch eine eine Profilelementflanke bildende Rillenwand (12,13) begrenzt ist, welche sich jeweils in radialer Richtung R des Reifens aus dem Rillengrund (14) nach außen erstreckt, mit wenigstens einer Rille (9) mit einer Haupterstreckungsrichtung, deren größte Richtungskomponente in Umfangsrichtung U des Fahrzeugreifens ausgebildet ist,
wobei in der Oberfläche wenigstens einer **Rillenwand** (12,13) und/oder des **Rillengrundes (14) mehrere nebeneinander angeordnete und in Erstreckungsrichtung der Rille (9) ausgerichtete erste Reihen (16) von in Erstreckungsrichtung der Rille (9) hintereinander und von einander beabstandet angeordneten in die Rille (9) ragenden länglichen Erhebungen (17) ausgebildet sind, deren in Erstreckungsrichtung der Rille (9) gemessene Erstreckungslänge L₁ größer ist als ihre Erstreckungsbreite B₁, wobei die Erhebungen (17) einer ersten Reihe (16) jeweils in Erstreckungsrichtung der Rille (9) zu den Erhebungen (17) der benachbarten ersten Reihe (16) versetzt und unter Überlappung mit einer Erhebung (17)- insbesondere mit zwei Erhebungen (17) - der benachbarten ersten Reihe (16) angeordnet sind,**
**dadurch gekennzeichnet,**
**dass beiderseits einer ersten Reihe (16) zwischen der ersten Reihe (16) und der benachbarten ersten Reihe (16) jeweils eine in Erstreckungsrichtung der Rille (9) ausgerichtete zweite Reihe (18) von in Erstreckungsrichtung der Rille (9) hintereinander und von einander beabstandet angeordneten in die Rille (9) ragenden länglichen Erhebungen (19) ausgebildet ist, deren in Erstreckungsrichtung der Rille (9) gemessene Erstreckungslänge L₂ größer ist als ihre Erstreckungsbreite B₂ mit L₂< L₁ und mit B₂< B₁, wobei längs der Erstreckungsrichtung der Rille (9) innerhalb des Erstreckungsbereichs einer jeden Erhebung (17) der ersten Reihe (16) jeweils eine Erhebung (19) der zu ihr benachbarten zweiten Reihe (18) mit ihrer vollständigen Erstreckungslänge L₂ ausgebildet ist.**

2. Laufstreifenprofil gemäß den Merkmalen von Anspruch 1,
bei dem beiderseits einer ersten Reihe (16) zwischen der ersten Reihe (16) und der benachbarten ersten Reihe (16) jeweils eine in Erstreckungsrichtung der Rille (9) ausgerichtete zweite Reihe (18) von in Erstreckungsrichtung der Rille (9) hintereinander und von einander beabstandet angeordneten in die Rille (9) ragenden länglichen Erhebungen (19) ausgebildet ist, deren in Erstreckungsrichtung der Rille (9) gemessene Erstreckungslänge L₂ größer ist als ihre Erstreckungsbreite B₂ mit L₂< L₁ und mit B₂< B₁, wobei längs der Erstreckungsrichtung der Rille (9) innerhalb des Erstreckungsbereichs einer jeden Erhebung (17) der ersten Reihe (16) jeweils eine Erhebung (19) der zu ihr benachbarten zweiten Reihe (18) mit ihrer vollständigen Erstreckungslänge L₂ ausgebildet ist.

3. Laufstreifenprofil gemäß den Merkmalen von Anspruch **1,**
bei dem diejenigen zu zwei benachbarten ersten Reihen (16) jeweils zugeordneten zweiten Reihen (18), welche zwischen den beiden ersten Reihen (16) angeordnet sind, auf einer gemeinsamen Erstreckungslinie (18) ausgebildet sind, wobei auf der Erstreckungslinie (18) die Erhebungen (19) der zu der einen ersten Reihe (16) zuzuordnenden zweiten Reihe (17) und die Erhebungen (19) der zu der anderen ersten Reihe (16) zuzuordnenden zweiten Reihe (18) in alternierender Abfolge angeordnet sind.

4. Laufstreifenprofil gemäß den Merkmalen von Anspruch **1 oder 2,**
bei dem zwischen erster Reihe (16) und der ihr zugeordneten zweiten Reihe (18) jeweils eine weitere in Erstreckungsrichtung der Rille (9) ausgerichtete dritte Reihe (20) von in Erstreckungsrichtung der Rille (9) hintereinander und von einander beabstandet angeordneten, in die Rille (9) ragenden länglichen Erhebungen (21) ausgebildet ist, deren in Erstreckungsrichtung der Rille (9) gemessene Erstreckungslänge L₃ größer ist als ihre Erstreckungsbreite B₃ mit L₂≤ L₃ ≤L₁ - insbesondere mit L₂< L₃ <L₁ - und mit B₂≤ B₃ ≤B₁- insbesondere mit B₂< B₃ <B₁-, wobei in Erstreckungsrichtung der Rille (9) innerhalb des Erstreckungsbereichs einer jeden Erhebung (17) der ersten Reihe (16) jeweils eine Erhebung (21) der zu ihr benachbarten dritten Reihe (20) mit ihrer vollständigen Erstreckungslänge L₃ ausgebildet ist.

5. Laufstreifenprofil gemäß den Merkmalen von einem oder mehreren der vorangegangenen Ansprüche,
bei dem die Erstreckungslänge L₁ mit 8mm≤ L₁≤30mm und die Erstreckungsbreite B₁ mit 0,8mm≤ B₁≤1,5mm ausgebildet ist.

6. Laufstreifenprofil gemäß den Merkmalen von einem oder mehreren der vorangegangenen Ansprüche,
bei dem die Erstreckungsbreite B₁ mit (0,05 L₁)≤ B1≤(0,2 L₁) ausgebildet ist.

7. Laufstreifenprofil gemäß den Merkmalen von einem oder mehreren der Ansprüche **1 bis 5,**
bei dem die Erstreckungslänge L₂ mit 3mm≤ L₂≤10mm und die Erstreckungsbreite B₂ mit 0,8mm≤ B₂≤1,5mm ausgebildet ist.

8. Laufstreifenprofil gemäß den Merkmalen von einem oder mehreren der Ansprüche **1 bis 6,**
bei dem die Erstreckungsbreite B₂ mit (0,05 L₂)≤ B₂≤(0,2 L₂) ausgebildet ist.

9. Laufstreifenprofil gemäß den Merkmalen von einem oder mehreren der Ansprüche **1 bis 6,**
bei dem die Erstreckungslänge L₂ mit (1/3) L₁ ≤ L₂≤ (1/2) L₁ ausgebildet ist.

10. Laufstreifenprofil gemäß den Merkmalen von einem oder mehreren der vorangegangenen Ansprüche,
bei dem die senkrecht zur Oberfläche der Rillenwand (12,13) bzw. des Rillengrundes (14) gemessene maximale Erstreckungshöhe H der Erhebungen (17) mit 0,05mm ≤H ≤0,8mm - insbesondere mit 0,1mm ≤H ≤0,3mm - ausgebildet ist.

11. Laufstreifenprofil gemäß den Merkmalen von einem oder mehreren der Ansprüche **1 bis 9,**
bei dem die senkrecht zur Oberfläche der Rillenwand (12,13) bzw. des Rillengrundes (14) gemessene maximale Erstreckungshöhe h der Erhebungen (17) der ersten Reihe (16) größer ist als die der anderen Reihen (18,20).

12. Laufstreifenprofil gemäß den Merkmalen von einem oder mehreren der vorangegangenen Ansprüche,
wobei die Erhebungen (17) in ihren senkrecht zur Längserstreckungsrichtung ausgebildeten Querschnitten mit einer Oberflächenkontur aus zwei sich in einem Scheitelpunkt S schneidenden, geradlinigen Erhebungsflanken ausgebildet sind.

13. Laufstreifenprofil gemäß den Merkmalen von einem der vorangegangenen Ansprüche,
wobei die Erhebungen (17) mit einer längs ihrer Längenerstreckung veränderten Erstreckungshöhe ausgebildet sind,
wobei insbesondere die Erstreckungshöhe ausgehend von einem Erstreckungsende der Erhebung (17) in Richtung zum anderen Erstreckungsende der Erhebung (17) degressiv bis zur Position der maximalen Erstreckungshöhe zu- und im weiteren Erstreckungsbereich bis zum Erstreckungsende progressiv abnehmend ausgebildet ist.

## Claims

1. Tread profile of a vehicle tyre - in particular a pneumatic vehicle tyre - comprising grooves (6, 7, 8, 9), which separate radially raised profile elements (1, 3, 4, 5, 2) from one another, wherein the grooves (6, 7, 8, 9) are bounded inwards in the radial direction R in each case by a groove base (14) and on both sides of the groove base (14) in the direction of the adjacent profile element (1, 3, 4, 5, 2) in each case by a groove wall (12, 13), which forms a profile element flank and extends in each case outwardly from the groove base (14) in the radial direction R of the tyre, comprising at least one groove (9) with a main direction of extent of which the greatest directional component is formed in the circumferential direction U of the vehicle tyre, wherein in the surface of at least one groove wall (12, 13) and/or of the groove base (14) there are formed a number of first rows (16), arranged next to one another and aligned in the direction of extent of the groove (9), of elongated elevations (17), which are arranged one behind the other in the direction of extent of the groove (9) and at a distance from one another, protrude into the groove (9) and of which the length of extent L₁, measured in the direction of extent of the groove (9), is greater than their width of extent B₁, wherein the elevations (17) of a first row (16) are respectively offset in the direction of extent of the groove (9) in relation to the elevations (17) of the adjacent first row (16) and are arranged overlapping with an elevation (17) - in particular with two elevations (17) - of the adjacent first row (16),
**characterized**
**in that** on both sides of a first row (16), between the first row (16) and the adjacent first row (16), there is formed in each case a second row (18), aligned in the direction of extent of the groove (9), of elongated elevations (19), which are arranged one behind the other in the direction of extent of the groove (9) and at a distance from one another, protrude into the groove (9) and of which the length of extent L₂, measured in the direction of extent of the groove (9), is greater than their width of extent B₂, with L₂<L₁ and with B₂<B₁, wherein along the direction of extent of the groove (9) within the region of extent of each elevation (17) of the first row (16) an elevation (19) of the second row (18), adjacent thereto, is respectively formed with its full length of extent L₂.

2. Tread profile according to the features of Claim 1, in which on both sides of a first row (16), between the first row (16) and the adjacent first row (16), there is formed in each case a second row (18), aligned in the direction of extent of the groove (9), of elongated elevations (19), which are arranged one behind the other in the direction of extent of the groove (9) and at a distance from one another, protrude into the groove (9) and of which the length of extent L₂, measured in the direction of extent of the groove (9), is greater than their width of extent B₂, with L₂<L₁ and with B₂<B₁, wherein along the direction of extent of the groove (9) within the region of extent of each elevation (17) of the first row (16) an elevation (19) of the second row (18), adjacent thereto, is respectively formed with its full length of extent L₂.

3. Tread profile according to the features of Claim 1, in which those second rows (18) that are respectively assigned to two adjacent first rows (16) and are arranged between the first two rows (16) are formed by a common line of extent (18), wherein on the line of extent (18) the elevations (19) of the second row (17) that are to be assigned to the one first row (16) and the elevations (19) of the second row (18) that are to be assigned to the other first row (16) are arranged in alternating sequence.

4. Tread profile according to the features of Claim 1 or 2,
in which between the first row (16) and the second row (18) assigned thereto there is formed in each case a further, third row (20), aligned in the direction of extent of the groove (9), of elongated elevations (21), which are arranged one behind the other in the direction of extent of the groove (9) and at a distance from one another, protrude into the groove (9) and of which the length of extent L₃, measured in the direction of extent of the groove (9), is greater than their width of extent B₃, with L₂≤L₃≤L₁ - in particular with L₂<L₃<L₁ and with B₂≤B₃≤B₁ - in particular with B₂<B₃<B₁, wherein in the direction of extent of the groove (9) within the region of extent of each elevation (17) of the first row (16) an elevation (21) of the third row (20), adjacent thereto, is respectively formed with its full length of extent L₃.

5. Tread profile according to the features of one or more of the preceding claims,
in which the length of extent L₁ is formed with 8 mm ≤ L₁ ≤ 30 mm and the width of extent B₁ is formed with 0.8 mm ≤ B₁ ≤ 1.5 mm.

6. Tread profile according to the features of one or more of the preceding claims,
in which the width of extent B₁ is formed with (0.05 L₁) ≤ B₁ ≤ (0.2 L₁).

7. Tread profile according to the features of one or more of Claims 1 to 5,
in which the length of extent L₂ is formed with 3 mm ≤ L₂ ≤ 10 mm and the width of extent B₂ is formed with 0.8 mm ≤ B₂ ≤ 1.5 mm.

8. Tread profile according to the features of one or more of Claims 1 to 6,
in which the width of extent B₂ is formed with (0.05 L₂) ≤ B₂ ≤ (0.2 L₂).

9. Tread profile according to the features of one or more of Claims 1 to 6,
in which the length of extent L₂ is formed with (1/3) L₁ ≤ L2 ≤ (1/2) L₁.

10. Tread profile according to the features of one or more of the preceding claims,
in which the maximum height of extent H, measured perpendicularly to the surface of the groove wall (12, 13) or of the groove base (14), of the elevations (17) is formed with 0.05 mm ≤ H ≤ 0.8 mm - in particular with 0.1 mm ≤ H ≤ 0.3 mm.

11. Tread profile according to the features of one or more of Claims 1 to 9,
in which the maximum height of extent h, measured perpendicularly to the surface of the groove wall (12, 13) or of the groove base (14), of the elevations (17) of the first row (16) is greater than that of the other rows (18, 20).

12. Tread profile according to the features of one or more of the preceding claims,
in which the elevations (17) are formed in their cross sections taken perpendicularly to the direction of the longitudinal extent with a surface contour comprising two straight elevation flanks intersecting at a point of intersection S.

13. Tread profile according to the features of one of the preceding claims,
wherein the elevations (17) are formed with a height of extent that is changed along its linear extent,
wherein in particular the height of extent is formed increasing degressively from one end of the extent of the elevation (17) in the direction of the other end of extent of the elevation (17) up to the position of the maximum height of extent and is formed decreasing progressively in the further region of extent up to the end of extent.

## Revendications

1. Profil de bande de roulement d'un pneu de véhicule - en particulier d'un pneumatique de véhicule - avec des sillons (6, 7, 8, 9), qui séparent l'un de l'autre des éléments de profil surélevés radialement (1, 3, 4, 5, 2), dans lequel les sillons (6, 7, 8, 9) sont limités en direction radiale R vers l'intérieur respectivement par un fond de sillon (14) et de part et d'autre du fond de sillon (14) en direction de l'élément de profil adjacent (1, 3, 4, 5, 2) respectivement par une paroi de sillon (12, 13) formant un flanc d'élément de profil, qui s'étend respectivement vers l'extérieur en direction radiale R du pneu à partir du fond de sillon (14), avec au moins un sillon (9) avec une direction d'extension principale dont la plus grande composante directionnelle est formée dans la direction périphérique U du pneu de véhicule, dans lequel plusieurs premières rangées (16), disposées l'une à côté de l'autre et orientées dans la direction d'extension du sillon (9), de surélévations allongées (17) disposées l'une derrière l'autre dans la direction d'extension du sillon (9) et à distance l'une de l'autre et pénétrant dans le sillon (9) sont formées dans la surface d'au moins une paroi de sillon (12, 13) et/ou du fond de sillon (14), dont la longueur d'extension L₁ mesurée dans la direction d'extension du sillon (9) est plus grande que sa largeur d'extension B₁, dans lequel les surélévations (17) d'une première rangée (16) sont respectivement décalées par rapport aux surélévations (17) de la première rangée voisine (16) dans la direction d'extension du sillon (9) et sont disposées en chevauchement avec une surélévation (17) - en particulier avec deux surélévations (17) - de la première rangée voisine (16), **caractérisé en ce que** de part et d'autre d'une première rangée (16), entre la première rangée (16) et la première rangée voisine (16), est chaque fois formée une deuxième rangée (18), orientée dans la direction d'extension du sillon (9), de surélévations allongées (19) disposées l'une derrière l'autre dans la direction d'extension du sillon (9) et à distance l'une de l'autre et pénétrant dans le sillon (9), dont la longueur d'extension L₂ mesurée dans la direction d'extension du sillon (9) est plus grande que sa largeur d'extension B₂ avec L₂ < L₁ et avec B₂ < B₁, dans lequel, le long de la direction d'extension du sillon (9) à l'intérieur de la zone d'extension de chaque surélévation (17) de la première série (16), est chaque fois formée une surélévation (19) de la deuxième série (18) voisine de celle-ci, avec sa longueur d'extension totale L₂.

2. Profil de bande de roulement selon les caractéristiques de la revendication 1, dans lequel de part et d'autre d'une première rangée (16), entre la première rangée (16) et la première rangée voisine (16), est chaque fois formée une deuxième rangée (18), orientée dans la direction d'extension du sillon (9), de surélévations allongées (19) disposées l'une derrière l'autre dans la direction d'extension du sillon (9) et à distance l'une de l'autre et pénétrant dans le sillon (9), dont la longueur d'extension L₂ mesurée dans la direction d'extension du sillon (9) est plus grande que sa largeur d'extension B₂ avec L₂ < L₁ et avec B₂ < B₁, dans lequel, le long de la direction d'extension du sillon (9) à l'intérieur de la zone d'extension de chaque surélévation (17) de la première série (16), est chaque fois formée une surélévation (19) de la deuxième série (18) voisine de celle-ci, avec sa longueur d'extension totale L₂.

3. Profil de bande de roulement selon les caractéristiques de la revendication 1, dans lequel les deuxièmes rangées (18) respectivement associées à deux premières rangées voisines (16), qui sont disposées entre les deux premières rangées (16), sont formées sur une ligne d'extension commune (18), dans lequel les surélévations (19) de la deuxième rangée (17) à associer à la première rangée (16) et les surélévations (19) de la deuxième rangée (18) à associer à l'autre première rangée (16) sont disposées en une succession alternée sur la ligne d'extension.

4. Profil de bande de roulement selon les caractéristiques de la revendication 1 ou 2, dans lequel une autre troisième rangée (20), orientée dans la direction d'extension du sillon (9), de surélévations allongées (21) disposées l'une derrière l'autre dans la direction d'extension du sillon (9) et à distance l'une de l'autre et pénétrant dans le sillon (9) est formée entre une première rangée (16) et la deuxième rangée (18) qui lui est associée, dont la longueur d'extension L₃ mesurée dans la direction d'extension du sillon (9) est plus' grande que sa largeur d'extension B₃ avec L₂ ≤ L₃ ≤ L₁ - en particulier avec L₂ < L₃ < L₁ - et avec B₂ ≤ B₃ ≤ B₁ - en particulier avec B₂ < B₃ < B₁ -, dans lequel, dans la direction d'extension du sillon (9) à l'intérieur de la zone d'extension de chaque surélévation (17) de la première rangée (16), est chaque fois formée une surélévation (21) de la troisième rangée (20) voisine de celle-ci, avec sa longueur d'extension totale L₃.

5. Profil de bande de roulement selon les caractéristiques d'une ou de plusieurs des revendications précédentes, dans lequel la longueur d'extension L₁ est réalisée avec 8 mm ≤ L₁ ≤ 30 mm et la largeur d'extension B₁ est réalisée avec 0, 8 mm ≤ B₁ ≤ 1, 5 mm.

6. Profil de bande de roulement selon les caractéristiques d'une ou de plusieurs des revendications précédentes, dans lequel la largeur d'extension B₁ est réalisée avec (0,05 L₁) ≤ B₁ ≤ (0,2 L₁).

7. Profil de bande de roulement selon les caractéristiques d'une ou de plusieurs des revendications 1 à 5, dans lequel la longueur d'extension L₂ est réalisée avec 3 mm ≤ L₂ ≤ 10 mm et la largeur d'extension B₂ est réalisée avec 0,8 mm ≤ B₂ ≤ 1,5 mm.

8. Profil de bande de roulement selon les caractéristiques d'une ou de plusieurs des revendications 1 à 6, dans lequel la largeur d'extension B₂ est réalisée avec (0,05 L₂) ≤ B₂ ≤ (0,2 L₂).

9. Profil de bande de roulement selon les caractéristiques d'une ou de plusieurs des revendications 1 à 6, dans lequel la longueur d'extension L₂ est réalisée avec (1/3) L₁ ≤ L₂ ≤ (1/2) L₁.

10. Profil de bande de roulement selon les caractéristiques d'une ou de plusieurs des revendications précédentes, dans lequel la hauteur d'extension maximale H des surélévations (17), mesurée perpendiculairement à la surface de la paroi de sillon (12, 13) ou du fond de sillon (14), est réalisée avec 0,05 mm ≤ H ≤ 0,8 mm - en particulier avec 0,1 mm ≤ H ≤ 0,3 mm.

11. Profil de bande de roulement selon les caractéristiques d'une ou de plusieurs des revendications 1 à 9, dans lequel la hauteur d'extension maximale h des surélévations (17) de la première série (16), mesurée perpendiculairement à la surface de la paroi de sillon (12, 13) ou du fond de sillon (14), est plus grande que celle des autres rangées (18, 20).

12. Profil de bande de roulement selon les caractéristiques d'une ou de plusieurs des revendications précédentes, dans lequel les surélévations (17) sont formées, dans leurs sections transversales formées perpendiculairement à la direction d'extension longitudinale, avec un contour de surface composé de deux flancs de surélévation rectilignes, se coupant en un sommet S.

13. Profil de bande de roulement selon les caractéristiques d'une ou de plusieurs des revendications précédentes, dans lequel les surélévations (17) sont réalisées avec une hauteur d'extension qui varie de long de leur extension longitudinale, dans lequel en particulier la hauteur d'extension, en partant d'une extrémité d'extension de la surélévation (17) en direction de l'autre extrémité d'extension de la surélévation (17), est réalisée en augmentant de façon dégressive jusqu'à la position de la hauteur d'extension maximale et en diminuant de façon progressive dans l'autre zone d'extension jusqu'à l'extrémité d'extension.
